# EUROPEAN PATENT APPLICATION

(11) **EP 1 280 256 A1**
(43) Date of publication of application: **29.01.2003**
(21) Application number: 02254363.1
(22) Date of filing: 21.06.2002
(51) Int. Cl.: H02K 7/18

(54) **Electric machine rotor with crankshaft torsional damper**

(30) Priority: 26.07.2001 US 915791
(71) Applicant: Visteon Global Technologies, Inc., Dearborn, Michigan 48126-2490 (US)
(72) Inventor: Joachim, Jon B., Dearborn, Michigan 48124 (US)
(74) Representative: Simons, Alison Diane

(57) **Abstract**

A rotor assembly for an electric device comprising a hub fixedly connectable to a crankshaft of an engine and a rotor fixedly connected to said hub for operational engagement with a stator of the electric machine. An elastomeric dampener is disposed between and interconnects the hub and the rotor to dampen torsional vibration from the engine.

## Description

The present invention generally relates to a rotor for an electric machine driven by a crankshaft. More specifically, a rotor of the present invention includes a torsional damper between the rotor and the crankshaft.

### BACKGROUND

The rotor component of electrical machines such as starter/generators for motor vehicles are, in some applications, mounted to the crankshaft of the engine of the vehicle to be driven directly by the rotation of the crankshaft. Existing starter/generator electrical devices of this type are mounted at the rear of the vehicle engine between the engine and the transmission. This arrangement complicates assembly, service, and maintenance of the components, and typically requires unique parts to mount the starter/generator between the engine and transmission while interconnecting the engine and the transmission. Commonly, vehicle engines include a damper pulley mounted on the front end of the crankshaft at the front end of the vehicle engine. This pulley typically drives a belt which in turn drives other components of the engine. If the vehicle does not have any other components, or if the other components are driven by other sources, a dampening device must still be installed to provide torsional dampening to the crankshaft to balance and absorb vibrations within the crankshaft. Therefore, there is a need for an improved starter/generator and dampening device to be mounted to the crankshaft of a motor vehicle engine.

### SUMMARY OF THE INVENTION

In accordance with an aspect of the present invention, a rotor assembly for an electric device, such as a starter/generator includes a hub fixedly connectable to the front end of a crankshaft of a vehicle engine. A rotor is fixedly connected to the hub for operational engagement with a stator of the starter/generator. An elastomeric dampener is disposed between and interconnects the hub and the rotor to dampen torsional vibration from the engine.

In accordance with another aspect of the present invention a drivetrain for a motor vehicle comprises an engine including a crankshaft for transferring power therefrom. A transmission is coupled to said engine. An electric device is mounted to said engine opposite said transmission, said electric device including a hub fixedly connected to said crankshaft. A stator is mounted to said engine independently of said crankshaft. A rotor is fixedly connected to said hub and disposed within said stator for operational engagement with said stator, and an elastomeric material is disposed between and interconnecting said hub and said rotor to provide torsional dampening.

### BRIEF DESCRIPTION OF THE DRAWINGS

FIGURE 1 is a perspective view of a vehicle transmission and engine equipped with an electric device of the present invention.
FIGURE 2 is an end view a first embodiment of the present invention;
FIGURE 3 is a side sectional view of the first embodiment of the present invention;
FIGURE 4 is a side sectional view of a second embodiment of the present invention; and
FIGURE 5 is a side sectional view of the first embodiment of the present invention, shown with a pulley mounted thereto.

### DETAILED DESCRIPTION OF THE PREFERRED EMBODIMENTS

The following description of the preferred embodiments of the invention is not intended to limit the scope of the invention to these preferred embodiments, but rather to enable any person skilled in the art to make and use the invention. Referring to the Figures, wherein like numerals indicate like or corresponding parts throughout the several views, a rotor assembly of the present invention is shown generally at 10.

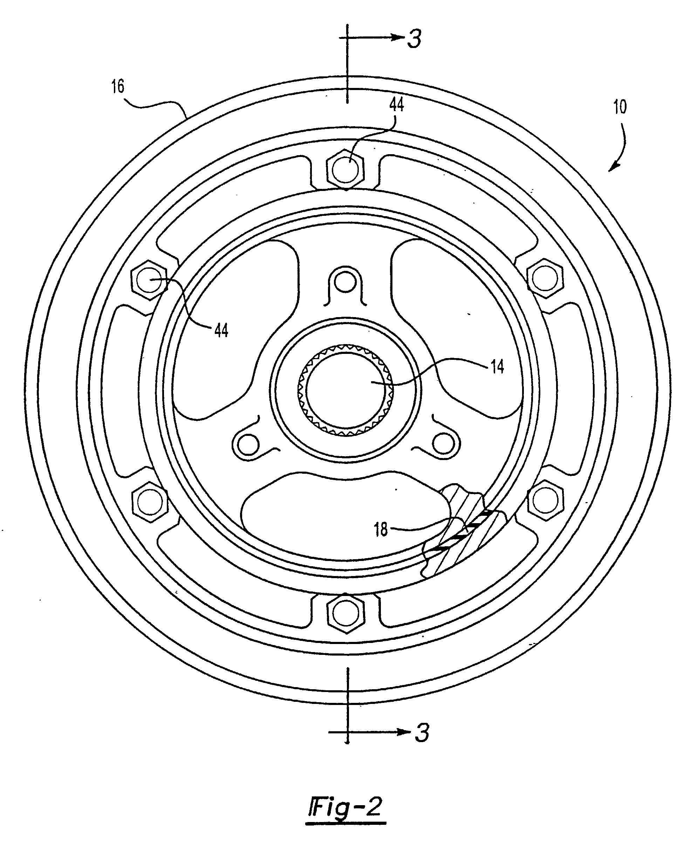

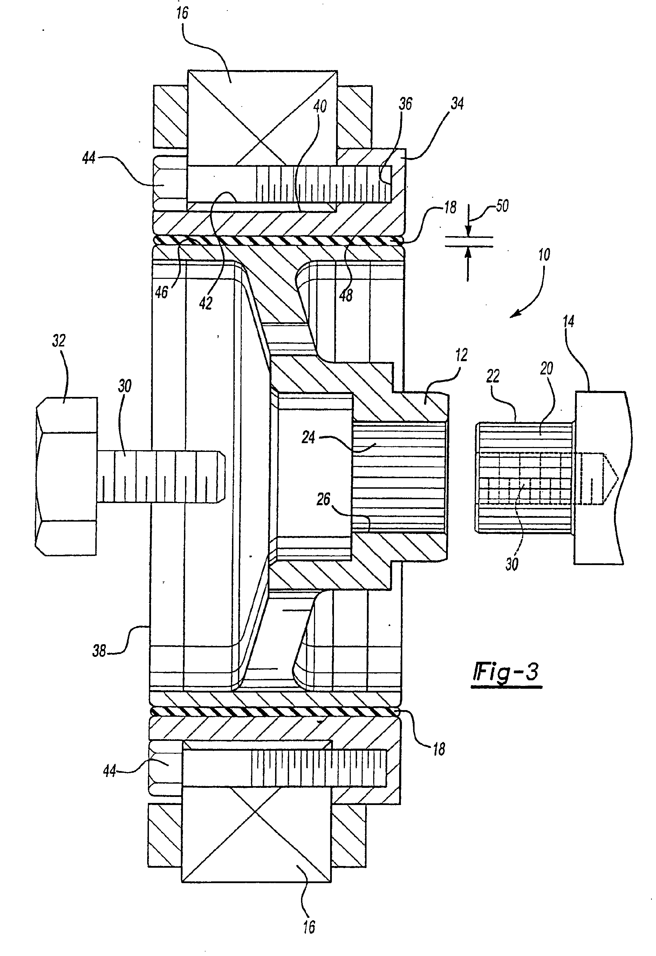

Referring to Figures 2 and 3, a rotor assembly 10 for an electric device comprises a hub 12 fixedly connectable to a crankshaft 14 of an engine, a rotor 16 fixedly connected to said hub 12 for operational engagement with a stator (not shown) of the electric machine, and an elastomeric dampener 18 disposed between and interconnecting the hub 12 and the rotor 16 to dampen torsional vibration from the engine.

The electrical device is any type of electrical motor or generator which utilizes a stator and a rotor to either provide driving force when fed with an electrical current, or in the alternative, provides an electric current when provided with a driving force. Preferably, the electrical device is a starter/generator for a vehicle that provides both a starting motor to turn the crankshaft when the vehicle is started, and a generator to provide an electric output when the vehicle is running.

The rotor 16 is attached to a front end 20 of the crankshaft 14 on a front side of the engine, such that when the crankshaft 14 of the engine rotates the rotor 16 will be driven rotationally. In the preferred embodiment, the front end 20 of the crankshaft 14 includes an end that has an outer diameter 22 and the hub 12 includes a centre aperture 24 with an inner diameter 26. In the preferred embodiment, the inner diameter 26 of the centre aperture 24 and the outer diameter 22 of the front end 20 of the crankshaft 14 are sized to allow the hub 12 to be forced onto the front end 20 of the crankshaft 14, thereby forming a press fit condition. Preferably, the front end 20 of the crankshaft 14 further includes a threaded bore 28 extending longitudinally into the crankshaft 14. A fastener 30 is threadingly engaged within the threaded bore 28. The fastener 30 includes a head portion 32 which has a diameter which is larger that the inner diameter 26 of the centre aperture 24 within the hub 12 so that the fastener 30 provides additional support to maintain the hub 12 in a press fit condition onto the front end 20 of the crankshaft 14.

In a first preferred embodiment, the hub 12 includes an outer flange 34 that includes a plurality of threaded bores 36 spaced radially about an outer diameter 38 of the outer flange 34. The rotor 16 includes an inner diameter 40 with a plurality of apertures 42 spaced radially about the rotor 16 for receiving fasteners 44 that extend through the apertures 42 in the rotor 16 and threadingly engage the threaded bores 36 of the outer flange 34 to secure the rotor 16 to the outer flange 34.

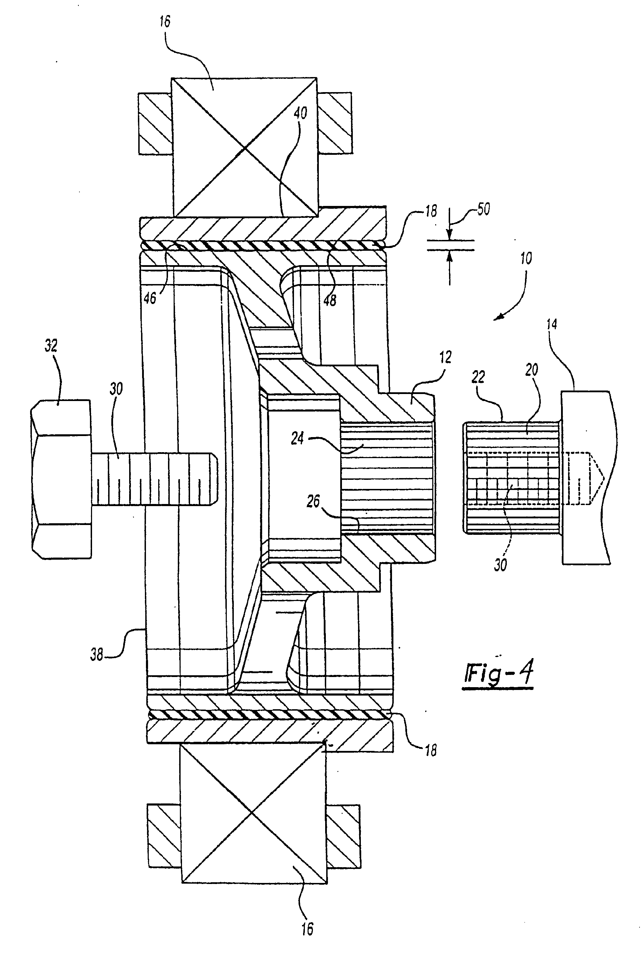

Referring to Figure 4, in a second embodiment, the inner diameter 40 of the rotor 16 and the outer diameter 38 of the outer flange 34 are sized to allow the rotor 16 to be forced onto the outer diameter 38 of the outer flange 34, thereby forming a press fit condition and securing the rotor 16 to the outer flange 34.

In both the first and second embodiments, the outer flange 34 is attached to an outer diameter 46 of the hub 12. The outer diameter 46 of the hub 12 is smaller than an inner diameter 48 of the outer flange 34, thereby leaving a gap 50 between the hub 12 and the outer flange 34 extending radially around the hub 12. In the preferred embodiment, an elastomeric material is disposed between and interconnects the outer flange 34 to the hub 12. The elastomeric material 18 provides semi rigid support to securely hold the outer flange 34 onto the hub 12, while providing torsional dampening to the crankshaft 14.

Preferably, the elastomeric material 18 is a tough durable material, such as rubber, which will securely support the outer flange 34 and rotor 16, while being compliant to allow slight rotational movement between the hub 12 and the outer flange 34, thereby providing torsional dampening to the system. Preferably, the elastomeric material 18 is moulded in place between the hub 12 and the outer flange 34 by placing the hub 12 and the outer flange 34 within a mould, and disposing the elastomeric material 18 into the gap 50. The surfaces of the inner diameter 48 of the outer flange 34 and the outer diameter 46 of the hub 12 are preferably prepared ahead of time to provide surfaces to which the elastomeric material 18 will bond when cured. The surface preparation of the inner diameter 48 of the outer flange 34 and the outer diameter 46 of the hub 12 are selected based upon the elastomeric material 18 chosen for the application. It is to be understood, that any type of elastomeric material 18 could be used, based upon the mechanical and environmental characteristics that the starter/generator is designed for. It is also to be understood, that the elastomeric material 18 could be placed between the outer flange 34 and the hub 12 and attached to the surfaces of the outer flange 34 and the hub 12 by other suitable methods.

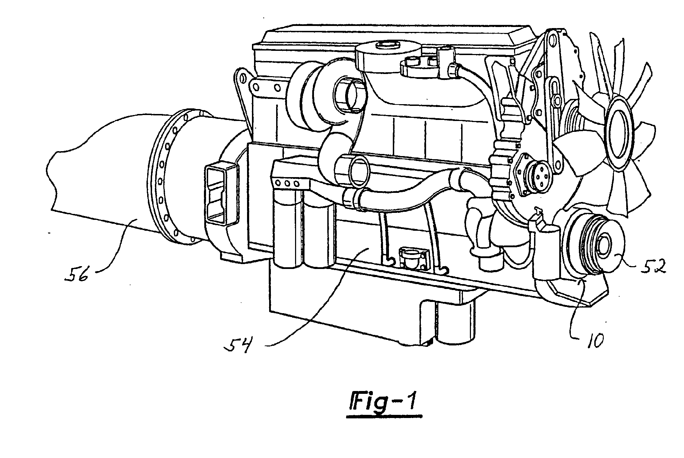

Referring to Figure 1, preferably, the electric device is mountable to a vehicle drive train, wherein the drive train includes an engine 54, a crankshaft 14 on the engine, and a transmission 56.. The hub 12 is fixedly connectable to the crankshaft 14 of the engine, while the stator (not shown) is mountable to the engine independently of the crankshaft 14. The hub 12 is mounted to the crankshaft 14 on an end of the engine opposite the transmission. The rotor 16 is fixedly connected to the outer flange 34 of the hub 12 and disposed within the stator for operational engagement with the stator. The elastomeric dampener 18 is disposed between and interconnects the hub 12 and the outer flange 34 to provide torsional dampening to the crankshaft 14. In the preferred embodiment, the hub 12 is connectable to the crankshaft 14 on a side of the engine opposite the transmission.

Preferably, the electric device has two modes of operation, such as a starter/generator. The first mode of operation is as an electric starter for the engine 54. When an electric current is fed to the starter generator, the rotor 16 rotates within the stator thereby forcing the crankshaft 14 to rotate correspondingly. This mode is used to provide initial rotation of the crankshaft 14 to start the engine 54. The second mode of operation is as a generator. After the engine 54 is started, the electric current being fed to the starter/generator is cut off. As the crankshaft 14 spins under the power of the engine 54, the rotor 16 continues to rotate within the stator, thereby generating electrical energy which can be fed from the starter/generator to be used elsewhere in the vehicle.

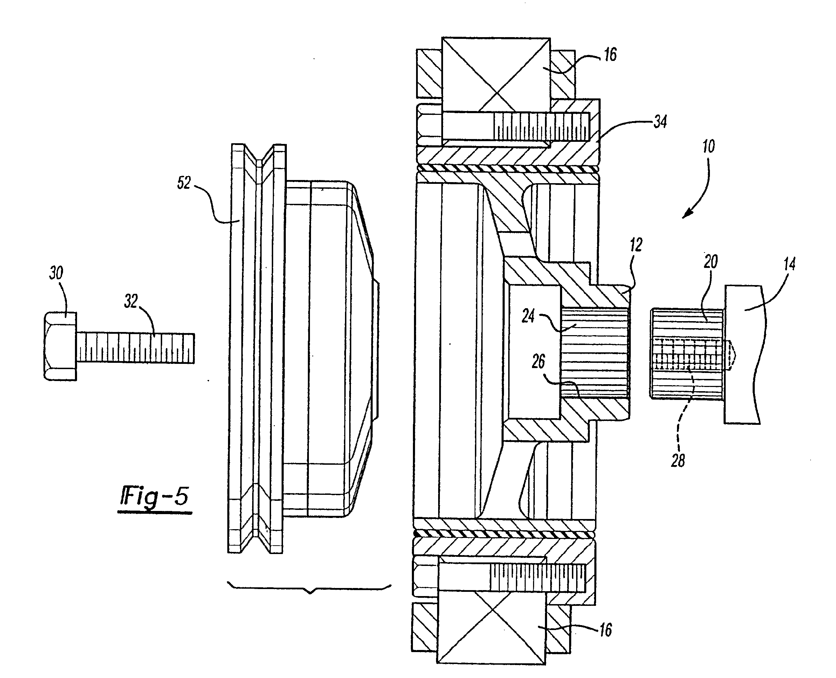

Although the elastomeric material 18 disposed between the hub 12 and the outer flange 34 provides torsional dampening to the system, there still may be a need for a pulley 52 mounted on the front end 20 of the crankshaft 14 to drive various components of the vehicle. Referring to Figure 5, the rotor assembly 10 can include a pulley 52 mounted onto the hub 12 for driving a belt (not shown) that can be routed to other components of the vehicle engine 54, such as an air conditioning compressor. The pulley 52 can be mounted to a rotor assembly 10 with either a bolted on rotor 16 or a press fit rotor 16.

The foregoing discussion discloses and describes three preferred embodiments of the invention. One skilled in the art will readily recognize from such discussion, and from the accompanying drawings and claims, that changes and modifications can be made to the invention without departing from the scope of the invention as defined in the following claims. The invention has been described in an illustrative manner, and it is to be understood that the terminology which has been used is intended to be in the nature of words of description rather than of limitation.

## Claims

1. A rotor assembly for an electric device comprising:
a hub fixedly connectable to a crankshaft of an engine;
a rotor fixedly connected to said hub for operational engagement with a stator of the electric device; and
an elastomeric material disposed between and interconnecting said hub and said rotor to provide torsional dampening.

2. The rotor assembly of claim 1 wherein said hub includes an inner diameter sized to allow said hub to be press fit onto an end of the crankshaft and held thereto by a bolt threaded into the end of the crankshaft.

3. The rotor assembly of claim 1 wherein said hub includes an outer flange and said rotor is attached to said outer flange with threaded fasteners spaced radially about said hub.

4. The rotor assembly of claim 1 wherein said hub includes an outer flange and said rotor includes an inner diameter, said outer flange and said inner diameter being sized to allow said rotor to be press fit onto said outer flange and held securely thereto.

5. A drivetrain for a motor vehicle comprising:
an engine including a crankshaft for transferring power therefrom;
a transmission coupled to said engine;
an electric device mounted to said engine opposite said transmission, said electric device including a hub fixedly connected to said crankshaft, a stator mounted to said engine independently of said crankshaft, a rotor fixedly connected to said hub and disposed within said stator for operational engagement with said stator, and an elastomeric material disposed between and interconnecting said hub and said rotor to provide torsional dampening.

6. The drivetrain of claim 5 wherein said electric machine has a first mode of operation as an electric starter for said engine, and a second mode of operation as a generator.

7. The drivetrain of claim 5 or 6 wherein said hub is press fit onto an end of the crankshaft and held thereto by a bolt threaded into the end of the crankshaft.

8. The drivetrain of claim 5 or 6 wherein said hub includes an outer flange and said rotor is attached to said outer flange with threaded fasteners spaced radially about said hub.

9. The drivetrain of claim 5 or 6 wherein said hub includes an outer flange and said rotor includes an inner diameter, said outer flange and said inner diameter being sized to allow said rotor to be press fit onto said outer flange and held securely thereto.
